# EUROPÄISCHE PATENTANMELDUNG

(11) **EP 2 365 275 A1**
(43) Veröffentlichungstag der Anmeldung: **14.09.2011**
(21) Anmeldenummer: 10192507.1
(22) Anmeldetag: 25.11.2010
(51) Int. Cl.: G01B 3/14, G01B 5/00, G01B 5/20

(54) **Vorrichtung zur reproduzierbaren Ablehrung von Prototypenschläuchen mittels eines Baukastensystems und Verfahren zur Herstellung einer derartigen Vorrichtung, insbesondere mittels der Laser-Sinter-Technologie**

(30) Priorität: 22.02.2010 DE 102010000499
(71) Anmelder: ContiTech Fluid Automotive GmbH, 21079 Hamburg (DE)
(72) Erfinder: Stuhrmann, Dirk, 21031 Hamburg (DE); Meijer, Dirk, 25436 Uetersen (DE); Ernst, Florian, 85057 Ingolstadt (DE)
(74) Vertreter: Finger, Karsten

(57) **Zusammenfassung**

Die Erfindung betrifft eine Vorrichtung zur reproduzierbaren Ablehrung von Prototypenschläuchen, umfassend ein oder mehrere Schlauchelement/e (32, 33, 34, 35, 36), wobei die erfindungsgemäße Vorrichtung ein Baukastensystem (31) ist, bestehend wenigstens aus folgenden Bauteilen:
- einer Grundplatte mit einer Gruppe von Verankerungselementen;
- einem Stützelement oder einer Gruppe von Stützelementen (29), wobei innerhalb der Unterseite und Oberseite des Stützelementes jeweils wenigstens ein Anschlusselement angeordnet ist, wobei das Anschlusselement der Unterseite des Stützelementes innerhalb der Gruppe von Verankerungselementen der Grundplatte fixierbar ist; sowie
- einem offenen Konturelement oder einem System von offenen Konturelementen (30), in das das/die Schlauchelement/e (32, 33, 34, 35, 36) einsetzbar ist/sind, wobei das Anschlusselement der Oberseite des Stützelementes mit dem Konturelement oder mit dem System von Konturelementen (30) verbindbar ist.

Darüber hinaus wird ein Verfahren zur Herstellung einer derartigen Vorrichtung, insbesondere die des Konturelementes, mittels des Rapid Prototyping-Verfahrens, insbesondere der Laser-Sinter-Technologie, vorgestellt.

## Beschreibung

Die Erfindung betrifft eine Vorrichtung zur reproduzierbaren Ablehrung von Prototypenschläuchen, umfassend ein oder mehrere Schlauchelement/e. Zumeist bilden dabei mehrere Schlauchelemente eine Schlauchanordnung. Eine derartige Schlauchanordnung besteht wenigstens aus einem Schlauch aus einem polymeren Werkstoff mit elastischen Eigenschaften, insbesondere in Form einer vulkanisierten Kautschukmischung, sowie wenigstens aus einem Zusatzbauteil aus Metall oder einem polymeren Werkstoff. Der polymere Werkstoff des Zusatzbauteiles kann ein Elastomer, ein thermoplastisches Elastomer oder ein thermoplastischer Kunststoff sein. Hinsichtlich derartiger Schlauchordnungen wird beispielsweise auf folgende Patentliteratur verwiesen:

| | | | |
|---|---|---|---|
| D1 | DE 33 36 940 C2 | D5 | EP 0 696 952 B1 |
| D2 | DE 34 03 727 C2 | D6 | EP 1 208 322 B1 |
| D3 | DE 34 30 053 C1 | D7 | WO 2007/045322 A1 |
| D4 | EP 0 367 136 B1 | D8 | DE 10 2009 044 014.3 (nachveröffentlicht) |

Die Dokumente D1 bis D3 und D5 befassen sich mit einer Formschlauchverzweigung, beispielsweise in Form eines T-förmigen Schlauches, wobei im Verzweigungsbereich ein Außenformteil aus einem polymeren Werkstoff auf die einzelnen Schlauchabschnitte aufgebracht ist. Hinsichtlich der Vorrichtung und des Verfahrens zur Herstellung einer derartigen Schlauchanordnung wird insbesondere auf das Dokument D5 verwiesen.

Das Dokument D4 offenbart eine Schlauchkupplung, umfassend einen hülsenförmigen Grundkörper mit einem Kupplungs- und Schlauchanschlussteil, und zwar unter dem Aspekt eines Verriegelungs- und Entriegelungskonzeptes.

Das Dokument D6 beschreibt eine Schlauchanordnung, bei der ein Schlauch auf einen Stutzen aus Metall oder Kunststoff aufgeschoben ist, wobei wiederum das Schlauchende mit einer aufgeschobenen Haltemanschette aus einem polymeren Werkstoff für die Schelle versehen ist. Die Haltemanschette besteht dabei aus einem polymeren Werkstoff.

Das Dokument D7 offenbart eine Schlauchanordnung als Verbindungsstück zwischen Luftfilter und Turbolader eines Fahrzeuges. Die Schlauchanordnung umfasst dabei einen Schlauch, der in Längsrichtung abschnittsweise Zonen aus einem Gummiwerkstoff mit jeweils unterschiedlicher Kautschukbasis aufweist, und zwar derart, dass die dem Turbolader unmittelbar benachbarte Zone des Schlauches einen Gummiwerkstoff aufweist, der sich gegenüber dem Gummiwerkstoff der dem Luftfilter unmittelbar benachbarten Zone durch eine erhöhte Festigkeit und/oder erhöhte Temperaturbeständigkeit auszeichnet.

Das Dokument D8 befasst sich mit einer Schlauchanordnung, bei der wenigstens ein Bauteil aus einem thermoplastischen Kunststoff den Schlauch segmentweise umgibt. Der thermoplastische Kunststoff ist dabei insbesondere ein Polyolefin (z.B. PE, PP), Polyamid, Polyphenylen oder ein Polyphenylenderivat (z.B. PPS). Das umgebende Bauteil ist ein Gehäuse, eine Verbindungsabdeckung, ein Abstandshalter, ein Scheuerschutz, ein Halter, eine Befestigungsklemme oder ein Ring, beispielsweise ein Zackenring.

Derartige Schlauchanordnungen finden eine breite Anwendung für Ladeluftsysteme sowie Heizungs- und Kühlwasserkreisläufe im Pkw- und Nutzfahrzeugbereich.

Im Hintergrund des breiten Anwendungsfeldes haben sich zahlreiche Prototypenschläuche, umfassend ein oder mehrere Schlauchelement/e entwickelt, wobei stets neue Prototypenschläuche hinzukommen. Hier wäre insbesondere die Entwicklung sparsamer Hybridfahrzeuge, die von einer Kombination aus Verbrennungs- und Elektromotor angetrieben werden, zu nennen. Diese Antriebstechnologie benötigt leistungsstarke Akkumulatoren zur Speicherung der elektrischen Energie. Zur Kühlung müssen diese Energiespeicher in den vorhandenen Kühlkreislauf des Fahrzeuges eingebunden werden. Diese Entwicklung hat natürlich einen Einfluss auf die Schlauchentwicklung.

Im Hintergrund dieser Problematik besteht die Aufgabe der Erfindung darin, eine Vorrichtung zur reproduzierbaren Ablehrung von Prototypenschläuchen bereitzustellen, welche sich sowohl wirtschaftlich als auch in Bezug auf die Herstellungszeit optimal in den heutigen Ablauf der Produktentwicklung und Prototypenfertigung integrieren lässt. Darüber hinaus soll hiermit die Möglichkeit gegeben werden, sich den wachsenden Anforderungen der Kunden, insbesondere der des Fahrzeugbaues, in Bezug auf Lieferzeit, Werkzeugkosten, Flexibilität und Qualitätsverbesserung zu stellen.

Gelöst wird diese Aufgabe dadurch, dass die Vorrichtung ein Baukastensystem ist, bestehend wenigstens aus folgenden Bauteilen:
- einer Grundplatte mit einer Gruppe von Verankerungselementen;
- einem Stützelement oder einer Gruppe von Stützelementen, wobei innerhalb der Unterseite und Oberseite des Stützelementes jeweils wenigstens ein Anschlusselement angeordnet ist, wobei das Anschlusselement der Unterseite des Stützelementes innerhalb der Gruppe von Verankerungselementen der Grundplatte fixierbar ist; sowie
- einem offenen Konturelement oder einem System von offenen Konturelementen, in das das/die Schlauchelement/e einsetzbar ist/sind, wobei das Anschlusselement der Oberseite des Stützelementes mit dem Konturelement oder mit dem System von Konturelemente verbindbar ist.

Im Folgenden wird auf die vorteilhaften Gestaltungsmöglichkeiten von Grundplatte, Stützelement und Konturelement eingegangen.

### Grundplatte

Die Grundplatte ist mit einer Gruppe von Bohrungen versehen, und zwar unter Ausbildung eines Bohrungsrasters, insbesondere in Form eines symmetrischen Bohrungsrasters. Diese Bohrungen dienen zur Verankerung des Stützelementes oder einer Gruppe von Stützelementen.

Die Bohrungen haben einen Durchmesser von vorzugsweise 12,5 mm und sind dabei symmetrisch auf einem 25 mm-Raster angeordnet. In der Mitte eines jeden Vierer-Blocks Bohrungen befindet sich eine Durchgangsbohrung mit einem M6-Gewinde. Mit Hilfe eines Koordinatensystems können zudem alle Bohrungen der Grundplatte eindeutig definiert werden. Dieses verläuft beispielsweise am linken Rand als Buchstabenfolge von A aufsteigend in y-Richtung, am unteren Rand als Zahlenfolge von 1 aufsteigend in x-Richtung.

Die Stärke einer Grundplatte beträgt vorzugsweise 12,5 mm.

Die Grundpatte besteht aus Metall oder einem Kunststoff, der insbesondere mit einem Füllstoff verstärkt ist, so dass der Kunststoff in seiner Festigkeit metallähnliche Eigenschaften aufweist. Zumeist wird für die Grundplatte Aluminium verwendet.

Die Grundplatte wird in wenigstens zwei verschiedenen Größen, insbesondere in zwei bis sechs verschiedenen Größen gefertigt. Zumeist wird die Grundplatte in vier unterschiedlichen Abmaßen gefertigt, nämlich:
200 x 400 mm
300 x 500 mm
400 x 600 mm
500 x 700 mm

Mit diesen Abmaßen der Grundplatte kann man ein vielfältiges Baukastensystem verwirklichen.

### Stützelement

Ein weiteres wichtiges Element einer Lehre ist das Stützelement mit einer Unterseite und einer Oberseite, die eine rechteckige, insbesondere eine quadratische Rechteckfläche aufweisen. Die Grundfläche ist dabei insbesondere 50 x 50 mm. Das Stützelement ist zwecks Gewichtsersparung als Hohlprofil ausgebildet. Von den insgesamt vier Seiten kann dabei eine Seite offen sein.

Aufgrund der Kundenvorgabe, dass die Schläuche in Einbaulage abgelehrt werden müssen und ein Schlauch bzw. die Schlauchanordnung nicht in einer Ebene verläuft, müssen baulich bedingte Höhenunterschiede überbrückt werden. Dies wird dadurch erreicht, dass das Stützelement in wenigstens zwei verschiedenen Größen, insbesondere in zwei bis sechs verschiedenen Größen vorkommt. Zumeist sind vier verschiedene Größen, und zwar im Sinne von Höhen, mit folgenden Maßen ausreichend:
25 mm Höhe
50 mm Höhe
75 mm Höhe
100 mm Höhe

Wird beispielsweise eine Höhe von 125 mm gefordert, so kann eine entsprechende Zusammenfügung zweier Stützelemente nach folgenden beiden Varianten erfolgen:
Stützelement (100 mm) und Stützelement (25 mm)
Stützelement (75 mm) und Stützelement (50 mm)

Diese Stützelemente können immer wieder verwendet werden.

Die Unterseite eines Stützelementes besitzt wenigstens einen Stift als Anschlusselement, der in das Bohrungsraster der Grundplatte eingreift. Vorzugsweise sind vier symmetrisch angeordnete Stifte vorhanden, die in das korrespondierende 25-mm-Bohrungsraster der Grundpatte eingreifen. Ein Stift hat dabei folgende bevorzugten Dimensionsparameter:

| | |
|---|---|
| Höhe: | 10 mm |
| Durchmesser | 12,35 mm |

Die Oberseite eines Stützelementes besitzt wenigstens eine Bohrung als ein weiteres Anschlusselement, wobei ein korrespondierender Stift des Konturelementes oder des Systems von Konturelementen in der Bohrung des Stützelementes fixierbar ist. Von besonderer Bedeutung sind vier symmetrisch angeordnete Bohrungen im Rahmen eines 25-mm-Rastermaßes. Eine Bohrung hat folgende bevorzugten Dimensionsparameter:

| | |
|---|---|
| Tiefe: | 11 mm |
| Durchmesser: | 12,5 mm |

Der obere Bereich des Stützelementes ist mit einer seitlichen Bohrung, beispielsweise mit einer 10 mm Bohrung versehen, die ein Klemmelement zur Befestigung des Konturelementes aufnehmen kann.

Das Stützelement besteht aus Metall oder einem Kunststoff, der insbesondere mit einem Füllstoff verstärkt ist. Von besonderer Bedeutung ist hier die Kunststoffvariante auf der Basis von Polymamid (PA), insbesondere PA12, sowie ferner Polypropylen (PP) oder Polyphenylensulfid (PPS). Dadurch werden gegenüber Metallen leichte und dennoch robuste Bauteile erzeugt.

### Konturelement

Innerhalb des Baukastensystems ist das Konturelement das bedeutendste Bauteil. Dabei kommt zumeist ein System von Konturelementen zum Einsatz. Das Konturelement liegt dabei als Halbschale vor ist zudem zwecks Gewichtsreduzierung als Hohlprofil ausgebildet. Das Konturelement besteht vorzugsweise aus einem Kunststoff, insbesondere aus Polyamid (PA), insbesondere wiederum aus PA12, das vorzugsweise mit Metallpartikeln, insbesondere mit Aluminiumpartikeln, verstärkt ist.

An der Unterseite des Konturelementes oder des Systems von Konturelementen ist wenigstens ein Stift als Anschlusselement vorhanden. Von besonderer Bedeutung sind auch hier vier symmetrisch angeordnete Stifte. Diese Stifte dringen in die korrespondierenden Bohrungen innerhalb der Oberseite des Stützelementes ein.

In das Konturelement bzw. in das System von Konturelementen kann das Schlauchelement bzw. die Schlauchanordnung eingelegt werden.

Im Zusammenhang mit dem gesamten Baukastensystem werden insbesondere folgende Schlauchelemente abgelehrt:
- Position einer Kupplung am Schlauchende;
- Position einer Federbandschelle oder eines Pressringes;
- Schlauchradien;
- Anfang und/oder Ende eines Schlauches oder Schrumpfschlauches;
- Schlauchverbindungsstücke unterschiedlicher Gestalt, beispielsweise T- oder Y-Verzweigungsstücke;
- Markierungen, beispielsweise eine Schellenmarkierung;
- Gehäuse, Verbindungsabdeckung, Abstandshalter, Scheuerschutz, Halter, Befestigungsklemme und Ring;
- Aufnahme eines Sensors, beispielsweise eines Temperatursensors;
- Hilfswerkszeuge, beispielsweise ein Dornwerkzeug.

Die erfindungsgemäße Vorrichtung wird insbesondere zur Ablehrung von Prototypenschläuchen für Ladeluftsysteme sowie Heizungs- und Kühlwasserkreisläufe im Pkw- und Nutzfahrzeugbereich verwendet.

Eine weitere Aufgabe der Erfindung besteht darin, ein Verfahren zur Herstellung einer Vorrichtung der vorgenannten Art bereitzustellen, das eine hohe Maßhaltigkeit der Bauteile, insbesondere des Konturelementes, gewährleistet, und zwar zusätzlich unter wirtschaftlichen Kriterien.

Gelöst wird diese verfahrenstechnische Aufgabe dadurch, dass wenigstens das Konturelement mittels eines Rapid Prototyping-Verfahrens erzeugt wird.

Im Folgenden werden die bekanntesten Rapid-Technologieverfahren kurz aufgeführt, und zwar unter Angabe der wesentlichen Literatur, die jedoch nur Auszug eines umfangreicheren Literaturpaketes ist.
- Stereolithographie
   Rapid Prototyping: Stereolithographie, Eutingen im Gäu, Promod GmbH, 2009
- Fused Deposition Modeling (FDM)
   Produktbeschreibung FDM, Funktionsprinzip der FDM-Technologie, Alphacam Fertigungssoftware GmbH, 2009
- Photopolymerverfahren
   Schillen V., Perfactory, Photopolymerverfahren, Phanos GmbH, Mai 2009
- PolyJet-Verfahren
   Allgemeine Informationen: 3D-Printing mit der PolyJet-Technologie von Objet, Rapid Technologies GmbH, Juli 2008
- 3D-Drucken
   Klach, Z Corporation: 3D-Drucktechnologie, Z Corporation, 2005
- Laser-Sinter-Technologie
   EOSINT Funktionsprinzip Laser-Sintern, EOS GmbH, 2009

Hinsichtlich einer besonders detaillierten Beschreibung der Rapid Prototypingverfahren wird ergänzend noch auf folgende Literatur verwiesen:
Gebhardt A., Generative Fertigungsverfahren, München, Hanser Verlag 2007.

Rapid Prototyping bzw. die schnelle Herstellung von Prototypen bezeichnet die Anwendung der Technologie der generativen Fertigungsverfahren. Die schichtweise Generierung der Geometrie erfolgt direkt aus den 3D-CAD-Daten. Es ist kein Einsatz produktspezifischer Werkzeuge notwendig.

Der entscheidende Fortschritt, der den generativen Verfahren den Namenszusatz "Rapid" beschert hat, bestand darin, komplexe Formteile schneller und preisgünstiger zu erhalten, als dies bisher möglich war. Damit ist dieses Verfahren für ein Baukastensystem für Prototypenlehren besonders gut geeignet.

Die im Rahmen eines bevorzugten Rapid Prototyping-Verfahrens zum Einsatz kommende Laser-Sinter-Technologie wird nun näher vorgestellt.

Bei der Laser-Sinter-Technologie wird das dreidimensionale CAD-Modell (CAD = Computer Aided Design) wie bei allen anderen Rapid Prototyping-Verfahren per Software in Schichten zerlegt. Die Schichtdicke beträgt 0,1 mm.

Nachdem die CAD-Daten für die Laser-Sinter Anlage (Formiga P100 der Firma EOS GmbH) aufbereitet wurden, werden diese an die Rechnereinheit der Anlage gesendet.

Der Kunststoff, insbesondere Polyamid, das mit Aluminium verstärkt ist, aus dem die Bauteile während des Prozesses entstehen, liegt pulverförmig in der Prozesskammer vor. Dieses Pulver wird schichtweise auf die absenkbare Bauplattform durch einen Flachschieber übertragen. Der Laserstrahl fährt die Kontur der Bauteile zeilenförmig nach jeder Schicht ab.

In der Wechselwirkungszone zwischen Laserstrahl und dem Kunststoff werden die Pulverpartikel aufgeschmolzen, verbinden sich miteinander und erstarren während der Abkühlungsphase zu einer zusammenhängenden Schicht festen Materials. Das nicht bearbeitete Material dieser Schicht verbleibt als Pulver und bildet das Stützmaterial für die fertigen Bauteile.

Die Bauplattform senkt sich um 0,1 mm ab und wird mit einer weiteren Schicht Pulver bedeckt. Die Kontur dieser Schicht wird wieder vom Laserstrahl abgefahren, und das geschmolzene Material verbindet sich mit der darunter liegenden Schicht. Die Bauplattform wird abgesenkt und eine neue Pulverschicht aufgetragen.

Dieser Vorgang des schichtweisen Aufbaus wird so oft wiederholt, bis die kompletten Bauteile in einem Pulverbett entstanden sind.

Hinsichtlich des Kreislaufs des Laser-Sinter-Verfahrens wird hier insbesondere auf folgende Literatur verwiesen: EOSINT Funktionsprizip Laser-Sintern, EOS GmbH, 2009.

Da dieser Fertigungsprozess bei einer Temperatur von etwa 160 °C geschieht, ist eine Abkühlphase notwendig, bis die Pulverbox mit den darin enthaltenden Bauteilen entnommen werden kann.

Die Bauteile werden in einer Strahlkabine per Druckluft aus ihrem Pulverbett befreit.

Das überschüssige Pulver kann mit frischem Pulver im bevorzugten Verhältnis 1:1 wieder verwendet werden.

Es wird eine Vielzahl von Werkstoffen auf Polyamid (PA) basierend angeboten, wobei das PA12 bevorzugt zum Einsatz gelangt. Auch Metalle und Leichtmetalle wie Stahlguss, Gusseisen, Edelstahl, Aluminium, Magnesium und Metalllegierungen sind für das Laser-Sintem geeignet.

Folgende Tabelle hält abschließend den Vergleich aller Anforderungskriterien (AFG) der verschiedenen Rapid Prototyping-Verfahren (RPV) fest.

| **RPV** | **geometrische** | **temporäre** | **monetäre** | **thermische** | **mechanische** |
|---|---|---|---|---|---|
| | **AFG** | **AFG** | **AFG** | **AFG** | **AFG** |
| Stereolithographie | + | O | - | - | O |
| Fused Deposition Modeling | O | - | - | - | + |
| Photopolymer-verfahren | + | O | - | - | O |
| PolyJet-Verfahren | + | - | - | - | O |
| 3D-Drucken | O | + | + | - | - |
| **Laser-Sintern** | + | + | + | + | + |

| | | | | | |
|---|---|---|---|---|---|
| + empfehlenswert O möglich teilweise - nicht empfehlenswert | | | | | |

Wie diese RPF-Vergleichsdaten aufzeigen, kommt der Laser-Sinter-Technogie eine herausragende Bedeutung zu.

Abschließend erfolgt noch ein Vergleich mit den in der Vergangenheit ebenfalls zum Einsatz gelangten Holzlehren.

Eine Holzlehre wird von einem Modellbauer in Handarbeit hergestellt. Dieser verwendet klassische Holzbearbeitungswerkzeuge wie Säge, Feile, Bohr-, Fräs- und Schleifmaschine. Durch handwerkliches Geschick und Erfahrung ist eine Genauigkeit von unter 1 mm zu erreichen. Zu beachten ist jedoch, dass jede manuell erstellte Lehre ein Unikat darstellt und dabei Qualitätsschwankungen vorprogrammiert sind.

Eine maschinell erstellte Lehre nach CAD-Datensatz ist zum einen von der Fehlerfreiheit während der Konstruktion abhängig. Das nächste Prozesskriterium ist die Genauigkeit der Laser-Sinter-Anlage. Die Genauigkeit beträgt bei der Rapid Prototyping-Anlage 0,1 mm. Die Toleranz der Grundplatte sowie das Spiel, das beim Zusammenbau der Lehre entsteht, sind hinzuzurechnen.

Beachtet der Konstrukteur die vorgegebenen Toleranz- und Konstruktionsrichtlinien, ist eine Maßhaltigkeit der Lehr von maximal 0,2 bis 0,3 mm zu erwarten. Die qualitative Güte der Lehre ist damit als laser-gesinterte Variante höher als die klassische Holzlehre.

Die bisher verwendeten Holzlehren werden von einem Zulieferbetrieb eingekauft.

Pro Lehre ist eine mehrtägige Fertigungszeit veranschlagt. Durch den notwendigen Transportweg entstehen weitere zeitliche Einbußen. Da der Zulieferbetrieb mehrere Aufträge gleichzeitig zu bearbeiten hat, summiert sich die gesamte Anfertigungszeit auf mindestens ein bis zwei Wochen.

Für die Konstruktion sind erfahrungsgemäß etwa 3,5 bis 4 Stunden pro Durchschnittslehre einzukalkulieren. Die Fertigungszeit in der Anlage beträgt etwa 7,5 bis 8 Stunden für eine durchschnittliche Lehre.

Da die Bauteile vollautomatisch in der Laser-Sinter-Anlage gefertigt werden, kann dies unabhängig von der Tageszeit geschehen. Durch geeignete Koordination der Aufträge ist eine Gesamtherstellungszeit von einem Tag realistisch. Es können kurzfristige Termine, wie sie in der Artikelentwicklung vorkommen, eingehalten werden.

Durch einen Vergleich der Holzlehrentechnologie mit dem Laser-Sinter-Verfahren kristallisierten sich zusammenfassend folgende Vorteile zugunsten der Laser-Sinter-Technologie heraus:
- Erhöhung der Genauigkeit
- Verkürzung der Herstellungszeit
- Verringerung der Herstellungskosten
- Verkleinerung der Lagerkapazität

Außerdem wurde die Haltbarkeit und Wiederverwendbarkeit der Laser-Sinter-Technologie bewiesen.

Die Erfindung wird nun anhand von Ausführungsbeispielen unter Bezugnahme auf schematische Zeichnungen erläutert. Es zeigen:
- Fig. 1: eine erste Schlauchanordnung, umfassend mehrere Schlauchelemente;
- Fig. 2: eine zweite Schlauchanordnung, umfassend mehrere Schlauchelemente;
- Fig. 3: eine Grundplatte mit einem Bohrungsraster;
- Fig. 4: Stützelemente in vier verschiedenen Höhen;
- Fig. 5: ein Stützelement als Hohlprofil;
- Fig. 6: ein Konturelement;
- Fig. 7: ein Baukastensystem ohne eingelegte Schlauchanordnung;
- Fig. 8: ein Baukastensystem mit eingelegter Schlauchanordnung.

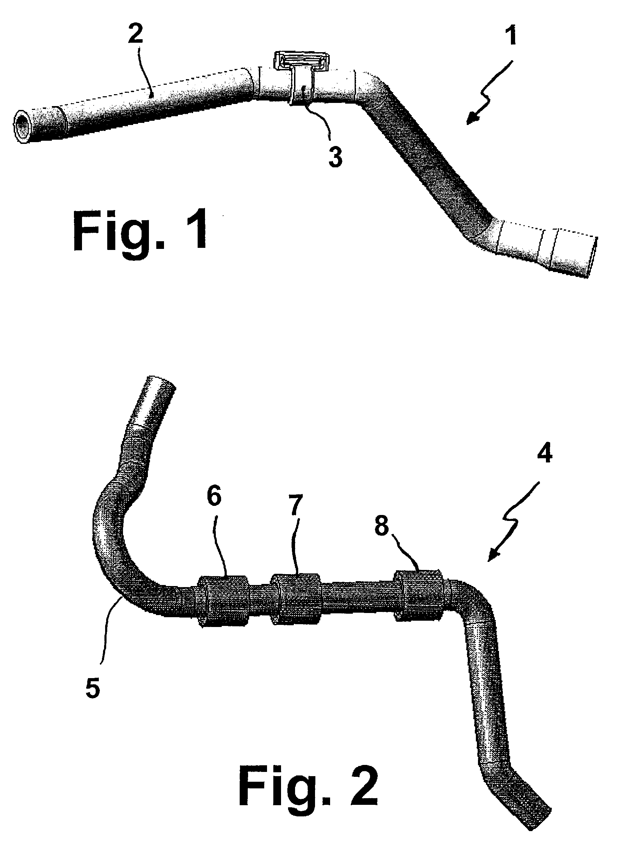

Nach den Fig. 1 und 2 umfassen die beiden Schlauchanordnungen 1 und 4 jeweils gerade und gekrümmte Schlauchabschnitte. Der Schlauch selbst besteht zumeist aus einer Innenschicht und Außenschicht aus einem elastomeren Werkstoff, beispielsweise aus Acrylat-Kautschuk (ACM) für die Innenschicht und Ethylen-Propylen-Dien-Kautschuk (EPDM) für die Außenschicht, sowie aus einem eingebetteten Festigkeitsträger, beispielsweise aus einem textilen Festigkeitsträger in Form eines Gestricks. Die diesbezüglichen textilen Werkstoffe sind insbesondere p-Aramid und m-Aramid sowie Polyester. Die umgebenden Bauteile bestehen nach einer neueren Entwicklung gemäß DE 10 2009 044 014.3 aus einem thermoplastischen Kunststoff, beispielsweise aus Polypropylen (PP). Das thermoplastische Bauteil 3 nach Fig. 1 ist als Befestigungsklemme oder Schellenhalter ausgebildet. Die thermoplastischen Bauteile 6, 7 und 8 nach Fig. 2 sind ringförmig gestaltet und können dabei verschiedene Funktionen ausüben, beispielsweise in Form eines Scheuerschutzes, einer Verbindungsabdeckung und eines Gehäuses.

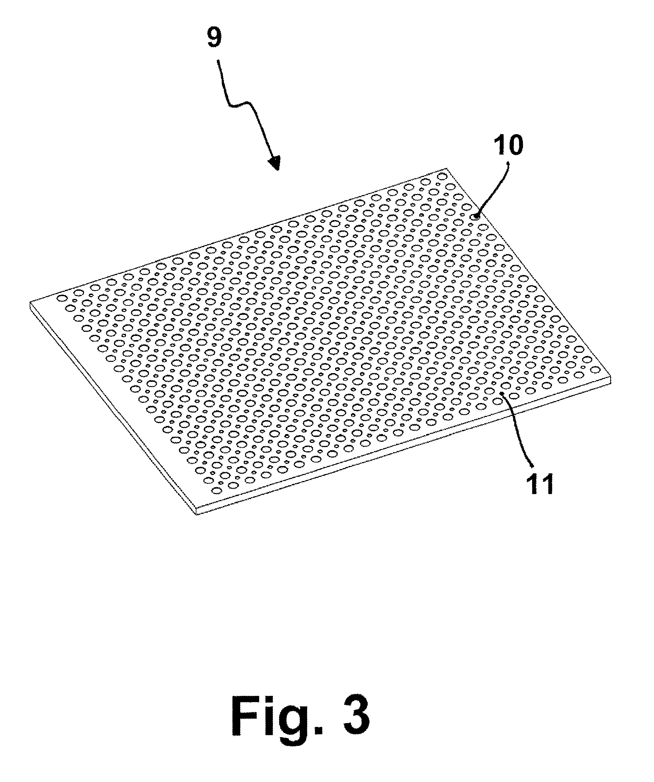

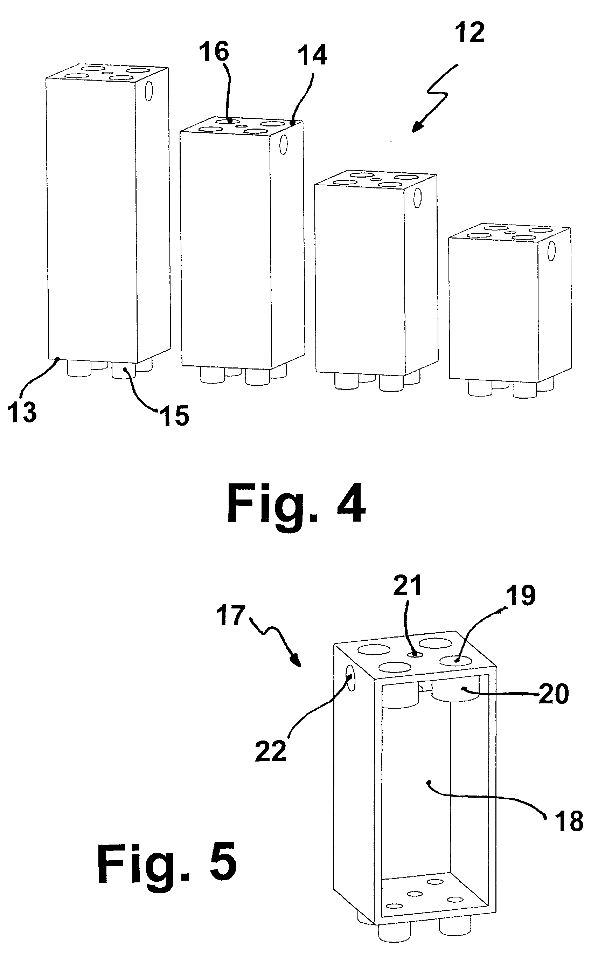

Fig. 3 zeigt eine Grundplatte 9, beispielsweise aus Aluminium, mit Bohrungen 10 als Verankerungselemente für das Stützelement, das mittels der Fig. 4 und 5 noch näher vorgestellt wird. Außerdem sind Durchgangsbohrungen 11 vorhanden. Um jede Durchgangsbohrung 11 herum sind in einem gleichen Abstand zueinander vier Bohrungen 10 angeordnet, und zwar unter Ausbildung eines symmetrischen Bohrungsrasters.

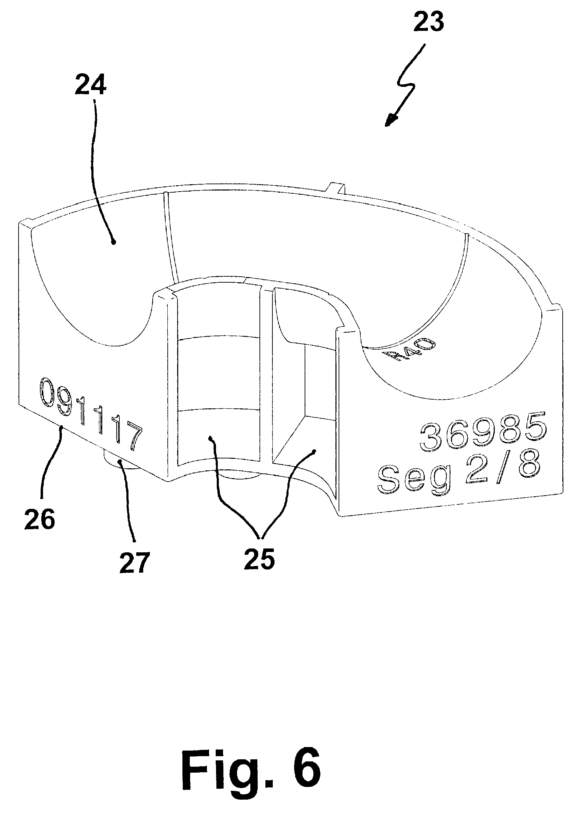

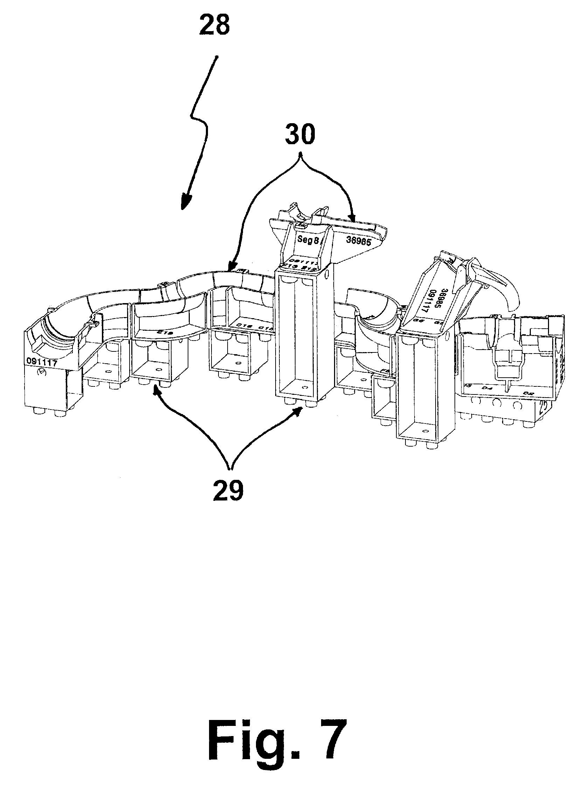

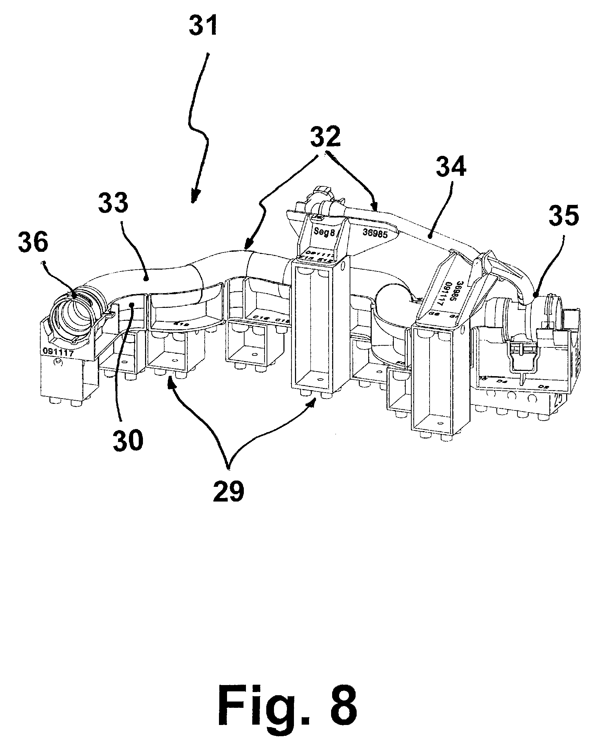

Fig. 4 zeigt ein Stützelement 12, insbesondere aus einem verstärkten Kunststoff, in vier verschiedenen Höhen. Jedes Stützelement 12 weist eine Unterseite 13 und Oberseite 14 mit jeweils quadratischer Querschnittsfläche auf. Die Unterseite 13 des Stützelementes 12 ist mit vier Stiften 15 versehen, die in das entsprechende Bohrungsraster der Grundplatte 9 (Fig. 3) eingreifen. Die Oberseite 14 des Stützelementes ist mit vier Bohrungen 16 ausgestattet, die das Anschlusselement für das Konturelement (Fig. 6) oder das System von Konturelementen (Fig. 7 und 8) bilden.

Nach Fig. 5 ist das Stützelement 17 als Hohlprofil 18 ausgebildet, wobei eine der vier Seiten geöffnet ist. Die Bohrung 19 befindet sich in einer Bohrungsaufnahme 20, die in das Innere des Stützelementes 17 reicht. Außerdem ist das Stützelement 17 wie auch die Grundplatte 9 (Fig. 3) mit Durchgangsbohrungen 21 versehen. Der obere Bereich des Stützelementes 17 ist mit einer seitlichen Bohrung 22 ausgestattet, die ein Klemmelement zur Befestigung des Konturelementes aufnehmen kann.

Fig. 6 zeigt ein gekrümmtes offenes Konturelement 23 als Halbschale 24 zur Aufnahme eines Schlauchelementes. Das Konturelement 23 besteht insbesondere aus einem verstärkten Kunststoff, insbesondere wiederum aus PA12, und ist als Hohlprofil 25 mit seitlichen Öffnungen ausgebildet. An seiner Unterseite 26 sind Stifte 27 angeordnet, die in die Bohrungen 16 bzw. 19 des Stützelementes 12 (Fig. 4) bzw. 17 (Fig. 5) eingreifen. Außerdem ist das Konturelement 23 mit Daten versehen, nämlich mit Radien (hier R40) und Segmentbezeichnungen.

Fig. 7 zeigt ein Baukastensystem 28, umfassend eine Gruppe von Stützelementen 29 mit gleichen wie auch unterschiedlichen Höhen. Mit diesen Stützelementen verbunden ist ein System von offenen Konturelementen 30 mit entsprechenden Bauteilangaben. Die Stützelemente 29 sind in der Grundplatte 9 (Fig. 3) verankert.

Fig. 8 zeigt das gleiche Baukastensystem 31, wie es im Rahmen der Fig. 7 vorgestellt wurde. In das System von Konturelementen 30 ist hier jedoch die komplette

Schlauchanordnung 32 eingesetzt. Diese Schlauchanordnung 32 umfasst einen gekrümmten Schlauchabschnitt 33, einen geraden Schlauchabschnitt 34 sowie einen Verzeigungsbereich 35 und einen Schlauchanschluss 36. Mit Hilfe der Gruppe von Stützelementen 29 in gleichen wie auch unterschiedlichen Höhen kann im Hinblick auf den simulierten Einbauzustand im Fahrzeug in optimaler Weise eine reproduzierbare Ablehrung von Prototypenschläuchen vorgenommen werden.

In die Ablehrung können auch Hilfswerkszeuge, beispielsweise Dornwerkzeuge, integriert werden. Die Dorne werden dabei mit Hilfe der Schlauchlehre geformt und sind in unterschiedlichen Ausführungen vorhanden.

### Bezugszeichenliste

### (Teil der Beschreibung)

- 1: Schlauchanordnung
- 2: Schlauch
- 3: umgebendes thermoplastisches Bauteil
- 4: Schlauchanordnung
- 5: Schlauch
- 6: umgebendes thermoplastisches Bauteil
- 7: umgebendes thermoplastisches Bauteil
- 8: umgebendes thermoplastisches Bauteil
- 9: Grundplatte
- 10: Bohrung der Grundplatte
- 11: Durchgangsbohrung der Grundplatte
- 12: Stützelement
- 13: Unterseite des Stützelementes
- 14: Oberseite des Stützelementes
- 15: Stift des Stützelementes
- 16: Bohrung des Stützelementes
- 17: Stützelement
- 18: Hohlprofil
- 19: Bohrung des Stützelementes
- 20: Bohrungsaufnahme des Stützelementes
- 21: Durchgangsbohrung des Stützelementes
- 22: seitliche Bohrung des Stützelementes
- 23: Konturelement
- 24: Halbschale
- 25: Hohlprofil
- 26: Unterseite des Konturelementes
- 27: Stift des Konturelementes
- 28: Baukastensystem
- 29: Gruppe von Stützelementen
- 30: System von Konturelementen
- 31: Baukastensystem
- 32: Schlauchanordnung
- 33: gekrümmter Schlauchabschnitt
- 34: gerader Schlauchabschnitt
- 35: Verzweigungsbereich der Schlauchanordnung
- 36: Schlauchanschluss

## Patentansprüche

1. Vorrichtung zur reproduzierbaren Ablehrung von Prototypenschläuchen, umfassend ein oder mehrere Schlauchelement/e (1, 2, 3, 4, 5, 6, 7, 8, 32, 33, 34, 35, 36), **dadurch gekennzeichnet, dass** die Vorrichtung ein Baukastensystem (28, 31) ist, bestehend wenigstens aus folgenden Bauteilen:
- einer Grundplatte (9) mit einer Gruppe von Verankerungselementen;
- einem Stützelement (12, 17) oder einer Gruppe von Stützelementen (29), wobei innerhalb der Unterseite (13) und Oberseite (14) des Stützelementes (12, 17) jeweils wenigstens ein Anschlusselement angeordnet ist, wobei das Anschlusselement der Unterseite (13) des Stützelementes (12, 17) innerhalb der Gruppe von Verankerungselementen der Grundplatte (9) fixierbar ist; sowie
- einem offenen Konturelement (23) oder einem System von offenen Konturelementen (30), in das das/die Schlauchelement/e (1, 2, 3, 4, 5, 6, 7, 8, 32, 33, 34, 35, 36) einsetzbar ist/sind, wobei das Anschlusselement der Oberseite (14) des Stützelementes (12, 17) mit dem Konturelement (23) oder mit dem System von Konturelementen (30) verbindbar ist.

2. Vorrichtung nach Anspruch 1, **dadurch gekennzeichnet, dass** die Grundplatte (9) mit einer Gruppe von Bohrungen (10) als Verankerungselemente versehen ist, und zwar unter Ausbildung eines Bohrungsrasters.

3. Vorrichtung nach Anspruch 2, **dadurch gekennzeichnet, dass** die Grundplatte (9) ein symmetrisches Bohrungsraster aufweist.

4. Vorrichtung nach Anspruch 2 oder 3, **dadurch gekennzeichnet, dass** die Unterseite (13) des Stützelementes (12, 17) wenigstens einen Stift (15) als Anschlusselement besitzt, der in das Bohrungsraster der Grundplatte (9) eingreift.

5. Vorrichtung nach einem der Ansprüche 2 bis 4, **dadurch gekennzeichnet, dass** die Oberseite (14) des Stützelementes (12, 17) wenigstens eine Bohrung (16, 19) als Anschlusselement besitzt, wobei wenigstens ein korrespondierender Stift (27) an der Unterseite (26) des Konturelementes (23) oder des Systems von Konturelementen (30) in der Bohrung (16, 19) des Stützelementes (12, 17) fixierbar ist.

6. Vorrichtung nach einem der Ansprüche 1 bis 5, **dadurch gekennzeichnet, dass** das Stützelement (12, 17) als Hohlprofil (18) ausgebildet ist.

7. Vorrichtung nach einem der Ansprüche 1 bis 6, **dadurch gekennzeichnet, dass** die Grundplatte (9) und das Stützelement (12, 17) in wenigstens zwei verschiedenen Größen vorkommen.

8. Vorrichtung nach einem der Ansprüche 1 bis 7, **dadurch gekennzeichnet, dass** die Grundplatte (9) sowie die Unterseite (13) und Oberseite (14) des Stützelementes (12, 17) mit einer Durchgangsbohrung (11, 21) versehen sind.

9. Vorrichtung nach einem der Ansprüche 1 bis 8, **dadurch gekennzeichnet, dass** der obere Bereich des Stützelementes (12, 17) eine seitliche Bohrung (22) aufweist, die ein Klemmelement zur Befestigung des Konturelementes (23) oder des Systems von Konturelementen (30) aufnimmt.

10. Vorrichtung nach einem der Ansprüche 1 bis 9, **dadurch gekennzeichnet, dass** das Konturelement (23) als Halbschale (24) vorliegt.

11. Vorrichtung nach einem der Ansprüche 1 bis 10, **dadurch gekennzeichnet, dass** das Konturelement (23) als Hohlprofil (25) ausgebildet ist.

12. Vorrichtung nach einem der Ansprüche 1 bis 11,**dadurch gekennzeichnet, dass** die Grundplatte (9) und/oder das Stützelement (12, 17) und/oder das Konturelement (23) aus Metall oder einem Kunststoff, der insbesondere mit einem Füllstoff verstärkt ist, besteht/bestehen.

13. Vorrichtung nach Anspruch 12, **dadurch gekennzeichnet, dass** das Metall Stahlguss, Gusseisen, Edelstahl, Aluminium, Magnesium oder eine Metalllegierung ist.

14. Vorrichtung nach Anspruch 12, **dadurch gekennzeichnet, dass** der Kunststoff aus Polyamid, Polyphenylen oder einem Polyphenylenderivat besteht.

15. Vorrichtung nach einem der Ansprüche 12 bis 14, **dadurch gekennzeichnet, dass** der Füllstoff Metallpartikel sind.

16. Vorrichtung nach einem der Ansprüche 1 bis 15, **dadurch gekennzeichnet, dass** diese folgende Schlauchelemente ablehrt:
- Position einer Kupplung am Schlauchende;
- Position einer Federbandschelle oder eines Pressringes;
- den Wulst zwischen einer Federbandschelle oder einem Pressring und einem Schlauch;
- Schlauchradien;
- Anfang und/oder Ende eines Schlauches oder Schrumpfschlauches;
- Schlauchverbindungstücke unterschiedlicher Gestalt;
- Markierungen;
- Gehäuse, Verbindungsabdeckung, Abstandshalter, Scheuerschutz, Halter, Befestigungsklemme und Ring;
- Aufnahme eines Sensors;
- Hilfswerkzeuge.

17. Verfahren zur Herstellung einer Vorrichtung nach einem der Ansprüche 1 bis 16, **dadurch gekennzeichnet, dass** wenigstens das Konturelement (23) mittels eines Rapid Prototyping-Verfahrens erzeugt wird.

18. Verfahren nach Anspruch 17, **dadurch gekennzeichnet, dass** wenigstens das Konturelement (23) mittels einer Laser-Sinter-Anlage erzeugt wird.
